Europäisches Patentamt

European Patent Office

Office européen des brevets

(11) Publication number: **0 122 713**
**B1**

(12) **EUROPEAN PATENT SPECIFICATION**

(45) Date of publication of patent specification: **07.06.89**

(21) Application number: **84301661.9**

(22) Date of filing: **13.03.84**

(51) Int. Cl.⁴: **G 02 B 23/26,** G 02 B 6/06

(54) Improvements in or relating to apparatus for observing optically guided images.

(30) Priority: **17.03.83 JP 44769/83**

(43) Date of publication of application:
**24.10.84 Bulletin 84/43**

(45) Publication of the grant of the patent:
**07.06.89 Bulletin 89/23**

(84) Designated Contracting States:
**AT BE CH DE FR GB IT LI NL SE**

(56) References cited:
**DE-A-2 447 040**
**GB-A-1 157 932**
**GB-A-2 068 581**
**US-A-3 004 368**
**US-A-3 758 188**

(73) Proprietor: **OLYMPUS OPTICAL CO., LTD.**
**43-2, 2-chome, Hatagaya Shibuya-ku**
**Tokyo 151 (JP)**

(72) Inventor: **Kimura, Hiroyuki**
**c/o Yamabiko-haitsu 102 2-17-5, Hikari-Cho**
**Kokubunji-Shi Tokyo (JP)**
Inventor: **Yamashita, Nobuo**
**20-5, Maruyama-cho**
**Hachioji-Shi Tokyo (JP)**

(74) Representative: **Jones, Colin et al**
**W.P. THOMPSON & CO. Coopers Building**
**Church Street**
**Liverpool L1 3AB (GB)**

EP 0 122 713 B1

## Description

The present invention relates to apparatus for observing optically guided images, and more particularly, to such an apparatus which observes an optical image which is guided through an optical image fibre bundle.

As is well known, an optical image fibre bundle which is employed as an image guide means in an endoscope or the like is constructed in a manner that a large number of superfine optical fibres are bundled together and arranged in a regular pattern. When an image to be observed is guided through the optical image fibre bundle thus constructed, the image is formed at one end surface (front end surface) of the fibre bundle and the formed image is optically guided through the fibre bundle to the other end surface (rear end surface) thereof. To observe the image on the rear end surface, observation is generally made with an eyepiece which magnifies the image. However, when the eyepiece is employed, an observer should observe the image in close proximity to an eyepiece portion in which the eyepiece is housed so as to apply one eye thereto.

With a conventional apparatus, when it is required to observe indications of other measuring instruments while observing at the eyepiece portion, an observer first observes the indication of other instruments keeping his eye or face away from the eyepiece portion and subsequently places his eye once again on the eyepiece portion. Such procedure of alternately observing the eyepiece portion and the indications of other instruments is troublesome, and repetition of such procedure causes inconvenience and fatigue. Accordingly, an observation apparatus adapted to make possible an observation without placing an eye in close proximity to the eyepiece portion has been proposed.

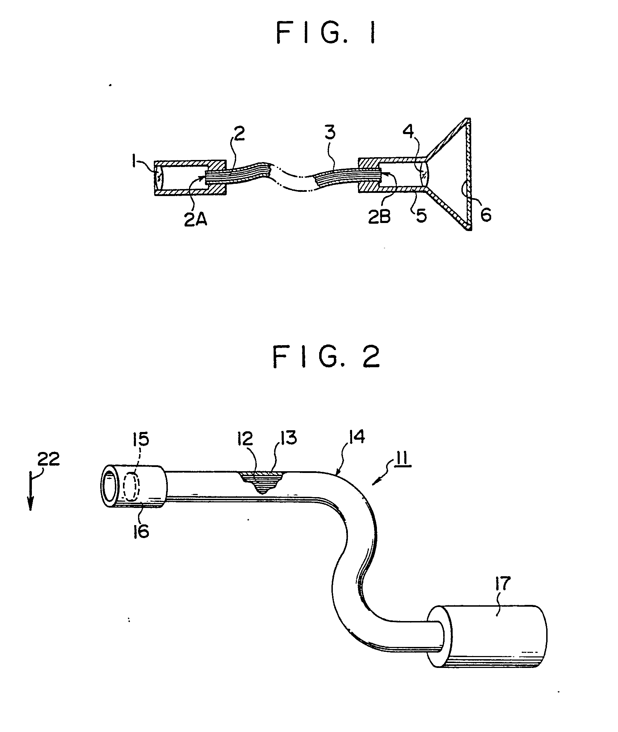

A proposed observation apparatus is constructed as shown in Fig. 1. Specifically, an image of an object to be observed is formed through an objective lens 1 on one end surface 2A of an optical image fibre bundle 2 which is covered by a flexible tube 3 and is guided to the other end surface 2B of the fibre bundle 2, on the opposite side of which surface a projector lens 4 is arranged within a projector case 5. The projector lens 4 serves for the purpose of magnifying the guided image on the rear end surface 2B and forming its picture on a projector screen 6 which is located behind the lens 4 within the case 5 and is formed with a ground glass screen or the like.

With an observation apparatus of the construction as described above, since the guided image on the rear end surface 2B of the fibre bundle 2 is magnified by the lens 4 and is projected on the screen 6, the projected image or picture can be observed at a distance from the rear end surface 2B and only the disadvantage of the aforesaid kind in the prior art can be avoided.

However, in the observation apparatus shown in Fig. 1, since a picture of the guided image is formed on the surface of the screen 6 by diffusion of light rays from the image, this incurs a great loss in light quantity. Therefore, when the formed image or picture on the screen 6 is not sufficiently bright, an image of an object to be observed, which object is illuminated with light passing through a superfine fibre bundle for guiding light which is inserted into a long and fine flexible tube to be introduced into a coeliac cavity or the like in an endoscope, cannot be satisfactorily observed unless the surrounding peripheral area is darkened. Additionally, although an image can be directly formed in space without employing the screen 6, in which case the optical image fibre bundle is employed as a means for guiding image light rays which form each picture element of the optical image and which are emitted from an end surface of each of optical fibres which form the optical image fibre bundle, are diffused merely within an extremely narrow field opposite the end surface of each of optical fibres. Even in an observation position to properly observe a magnified image, the inconvenience of it being impossible to observe the whole field but only a narrow part of the field may be experienced.

Accordingly, the applicant has proposed an observation apparatus which employs an image sensor element such as a CCD (charge-coupled-device) to solve the disadvantages in the above mentioned prior art observation apparatus. The proposed apparatus is constructed in a manner that a guided image is displayed on a picture image display employing a CCD so that a bright picture image can be displayed, even of a dark image by magnifying its video signal which is photoelectrically transduced.

However, the proposed apparatus is disadvantageous in that it increases its size, complexity and cost.

It is an object of the invention to provide an apparatus for observing an optically guided image which employs an optical image fibre bundle so that an optical image which is guided from one end surface of the fibre bundle to the other end surface thereof can be satisfactorily observed at a distance from an end surface on which the optical image is formed.

According to the present invention an observation optical system for observing an image, comprising an optical image fibre bundle guiding said image, is characterized by an image forming lens through which said image appearing on the rear end surface of the fibre bundle is reproduced and a field lens disposed in or in the vicinity of the position where said image is reproduced by said image forming lens, said field lens forming the exit pupil of the system adjacent an observation position or on that side of an observation position which faces the reproduced image position.

With apparatus embodying the present invention the optically guided image can be satisfactorily observed at a distance. Additionally, although the construction is simple, it is possible to observe a bright observation image with a low loss in light quantity and to observe a wide field. Further, as the construction is simple, there need be little or no increase in the size, complexity or cost. Apparatus embodying the present invention also makes possible simultaneous observation of indications of other instruments and the relief of an observer's eye from fatigue; in this way disadvantages of the prior art observation apparatus can be overcome.

The invention will be further described by way of example with reference to Figs. 2, 3 and 4 of the accompanying drawings in which:

Fig. 1 is section view illustrating an example of a conventional observation apparatus,

Fig. 2 is an exterior perspective view of an apparatus for observing an optically guided image embodying the present invention,

Fig. 3 is a section view of the essential parts of an apparatus for observing an optically guided image according to one embodiment of the present invention, and

Fig. 4 is a section view of the essential parts of an apparatus for observing an optically guided image according to another embodiment of the present invention.

Referring now to Fig. 2, an optical image guide device 11 which is attached to an observation apparatus embodying the present invention is constructed with a soft image guide cable 14 in which an optical image fibre bundle 12 which is formed by arranging a large number of superfine flexible optical fibres in a regular pattern and bundling them under conditions where the arrangements of both end surfaces thereof are substantially the same, is covered with a flexible tube 13. An objective lens barrel 16 in which an objective lens system 15 is housed is attached to one end portion of the image guide cable 14 (front end portion). An optical image of an object to be observed 22 is formed on the front end surface of the fibre bundle 12. The formed image is optically guided within the fibre bundle 12 and transmitted to the rear end surface of the latter.

An observation apparatus of the invention is attached to the other end portion of the image guide cable 14 (rear end portion).

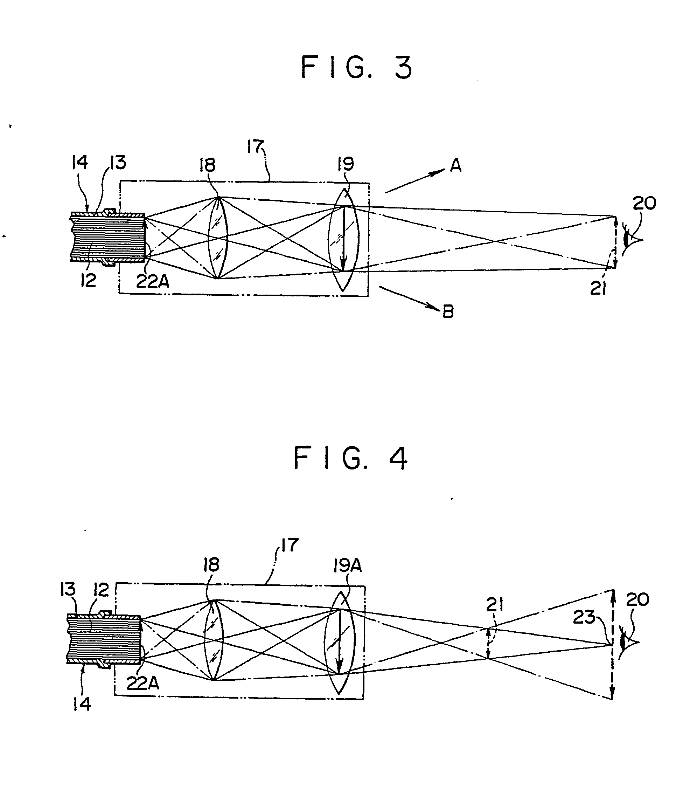

In Fig. 3, which illustrates an arrangement of an observation optical system in an observation apparatus according to one embodiment of the invention, the observation optical system comprises an image forming lens 18 and a field lens 19. The lens 18 is located in a position opposite the rear end surface of the fibre bundle 12 within an observation tube 17 (see Fig. 2) which is fixed to the rear end portion of the image guide cable 14. The field lens 19 is located in the image forming position of the lens 18 within the observation tube 17. Specifically, the field lens 19 is, as shown in detail in Fig. 3, placed in a position where the guided image on the rear end surface of the fibre bundle 12 is reproduced as a space image by the lens 18. The focal length of the field lens 19 is chosen so that light rays from the image formed at the image forming position of the lens 18, which rays are subsequently diffused rearwardly thereof, are converged in a position of an exit pupil 21 adjacent an observation position 20 (an eye position) at a distance from the observation optical system.

In operation, as shown in Fig. 2, after an image of the object 22 is formed on the front end surface of the fibre bundle 12 by the objective lens system 15, the formed image is transmitted to the rear end surface thereof as shown in Fig. 3. The transmitted image 22A on the rear end surface is reproduced as a space image in the position of the field lens 19 by the lens 18. In Fig. 3, optical paths where both ends of the transmitted image 22A are formed in the position of the field lens 19 are indicated with light solid lines. Without the field lens 19, since light rays which form both ends of the image in the position thereof (for example, both ends in the vertical) advance to diffuse into narrow fields alone centering upon the directions of arrows A and B, respectively, merely a part of the centre portion of the image can be seen at the observation position 20. However, in this embodiment of the invention, the light rays are converged by the field lens 19 so that the whole image can be satisfactorily observed in the exit pupil position 21 adjacent the observation position 20. Further, since the diffused light rays are thus converged, it is possible to satisfactorily observe the image as a bright one in the vicinity of the observation position without loss of a light quantity and vignetting of the image.

In Fig. 4, which illustrates an observation optical system in an observation apparatus according to another embodiment of the invention, the focal length of a field lens 19A is reduced relative to the observation position 20 so that a whole image can be observed merely at a centre portion 23 of the observation position 20 as shown in Fig. 4. In other words, the exit pupil 21 is made to locate on the image side. The construction of the rest of the observation optical system is the same as that in the embodiment shown in Fig. 3.

With the construction just described, the degree by which an image is invisible due to broken image zones in accordance with their displacement from the centre portion 23 will increase, but the field in which the image is observable at a distance from the observation optical system can be enlarged.

In the above embodiment, whilst invisible zones due to broken image zones might be caused, the whole image can be substantially gathered from observation of a part thereof. Besides, it is suitable for use in the case where an observation position should be moved in order to permit other operations to be performed. Further, since, in contrast with the prior art which does not employ the field lens 19A, the embodiment converges light rays in the field of the observation position 20, it is advantageous that an image is observable as a bright one in the same manner as in the embodiment shown in Fig. 3.

Further, while the field lenses 19, 19A in the above mentioned embodiments are fixed, it is to be noted that when the image forming lens 18 is movable an apparatus is constructed in such a manner that these field lenses are easily made to be movable in co-operative engagement therewith. Specifically, when the lens 18 moves, the apparatus can be easily made so that the field lens 19, 19A is moved in co-operative engagement with the lens 18 to the position where the lens 18 forms the image. In addition, it may be possible to construct the apparatus in such a manner that the field lens is adjusted to move from the position in the first embodiment shown in Fig. 3 to the position in the second embodiment shown in Fig. 4 (including any intermediate positions therebetween) or the status of the first or the second embodiment can be suitably selected in accordance with the observation position 20.

In addition, in the first and second embodiments, while the field lenses 19, 19A are accurately located in the image forming position of the lens 18, the locations of these field lenses 19, 19A may be practically in the vicinity of the image forming position of the lens 18 since these locations can be satisfactorily serviceable even when displaced somewhat from the image forming position.

## Claims

1. Observation optical system for observing an image comprising an optical image fibre bundle guiding said image, characterized by an image forming lens (18) through which said image (22A) appearing on the rear end surface of the fibre bundle is reproduced and a field lens (19, 19A) disposed in or in the vicinity of the position where said image (22A) is reproduced by said image forming lens (18), said field lens (19 or 19A) forming the exit pupil (21) of the system (18, 19, 19A) adjacent an observation position (20) or on that side of the observation position (20) which faces the reproduced image position.

2. Observation optical system according to claim 1, in which said image forming lens (18) and said field lens (19, 19A) are disposed within an observation tube (17) which is attached to the rear end portion of said optical image fibre bundle (12).

## Patentansprüche

1. Optisches Beobachtungssystem zur Beobachtung eines Bildes, mit einem optischen Bildfaserbündel, welches das Bild leitet, gekennzeichnet durch eine bilderzeugende Linse (18), durch die hindurch das auf der rückseitigen Stirnfläche des Faserbündels erscheinende Bild (22A) reproduziert wird und durch eine Feldlinse (19, 19A), die an dem Ort oder in der Nähe des Ortes angeordnet ist, wo das Bild (22A) durch die bilderzeugende Linse (18) reproduziert wird, wobei die Feldlinse (19 oder 19A) die Austrittspupille (21) des Systems (18, 19, 19A) angrenzend an einen Beobachtungsort (20) oder auf der dem Ort des reproduzierten Bildes zugewandten Seite des Beobachtungsortes (20) bildet.

2. Optisches Beobachtungssystem nach Anspruch 1, bei welchem die bilderzeugende Linse (18) und die Feldlinse (19, 19A) innerhalb eines Beobachtungstubus (17) angeordnet sind, der an dem rückseitigen Endabschnitt des optischen Bildfaserbündels (12) angebracht ist.

## Revendications

1. Système optique d'observation d'image, comprenant un faisceau de fibres optiques d'image assurant le guidage de ladite image, caractérisé par une lentille de formation d'image (18) par l'intermédiaire de laquelle ladite image (22A) apparaissant sur la surface d'extrémité arrière du faisceau de fibres est reproduite et une lentille de champ (19, 19A) disposée dans ou au voisinage de la position où ladite image (22A) est reproduite par ladite lentille de formation d'image (18), ladite lentille de champ (19 ou 19A) formant la pupille de sortie (21) du système (18, 19, 19A) dans une position adjacente à une position d'observation (20) ou bien sur le côté d'une position d'observation (20) qui est dirigé vers la position d'image reproduite.

2. Système optique d'observation selon la revendication 1, dans lequel ladite lentille de formation d'image (18) et ladite lentille de champ (19, 19A) sont disposées à l'intérieur d'un tube d'observation (17) qui est fixé sur la partie d'extrémité arrière dudit faisceau de fibres optiques d'image (12).

# FIG. 1

# FIG. 2

# FIG. 3

# FIG. 4